# EUROPEAN PATENT APPLICATION

(11) **EP 3 961 773 A1**
(43) Date of publication of application: **02.03.2022**
(21) Application number: 20870917.0
(22) Date of filing: 28.09.2020
(51) Int. Cl.: H01M 4/62, H01M 4/13, H01M 10/052, H01M 4/02

(54) **ELECTRODE AND SECONDARY BATTERY COMPRISING SAME**

(30) Priority: 04.10.2019 KR 20190122965
(71) Applicant: LG ENERGY SOLUTION, LTD., Seoul 07335 (KR)
(72) Inventor: KIM, Tae Gon, Daejeon 34122 (KR); PARK, Sin Young, Daejeon 34122 (KR); LEE, Bo Ram, Daejeon 34122 (KR); CHO, Hyung Man, Daejeon 34122 (KR); YOO, Tae Gu, Daejeon 34122 (KR); KWAK, Min, Daejeon 34122 (KR)
(74) Representative: Hoffmann Eitle
(86) International application number: PCT/KR2020/013284
(87) International publication number: WO 2021/066493

(57) **Abstract**

The present invention relates to an electrode including an electrode active material layer, wherein the electrode active material layer includes an electrode active material and a conductive agent, wherein the conductive agent includes graphene, and a carbon nanotube structure in which 2 to 5,000 single-walled carbon nanotube units are bonded to each other, and the carbon nanotube structure is included in an amount of 0.01 wt% to 0.5 wt% in the electrode active material layer, and a secondary battery including the same.

## Description

### TECHNICAL FIELD

### Cross-reference to Related Applications

This application claims priority from Korean Patent Application No. 10-2019-0122965, filed on October 4, 2019, the disclosure of which is incorporated by reference herein.

### Technical Field

The present invention relates to an electrode including an electrode active material layer, wherein the electrode active material layer includes an electrode active material and a conductive agent, wherein the conductive agent includes graphene; and a carbon nanotube structure in which 2 to 5,000 single-walled carbon nanotube units are bonded to each other, and the carbon nanotube structure is included in an amount of 0.01 wt% to 0.5 wt% in the electrode active material layer, and a secondary battery including the same.

### BACKGROUND ART

Demand for batteries as an energy source has been significantly increased as technology development and demand with respect to mobile devices have recently increased, and a variety of researches on batteries capable of meeting various needs have been carried out accordingly. Particularly, as a power source for such devices, research into lithium secondary batteries having excellent lifetime and cycle characteristics as well as high energy density has been actively conducted.

A lithium secondary battery denotes a battery in which a non-aqueous electrolyte containing lithium ions is included in an electrode assembly which includes a positive electrode including a positive electrode active material capable of intercalating/deintercalating the lithium ions, a negative electrode including a negative electrode active material capable of intercalating/deintercalating the lithium ions, and a microporous separator disposed between the positive electrode and the negative electrode.

Since conductivity of the electrode may not be secured only by the electrode active material, resistance of the battery may be excessively high, and thus, the electrode typically additionally includes a conductive agent. Typically, a point-type conductive agent, such as carbon black, has mainly been used, and a line-type conductive agent, such as carbon nanotubes and carbon nanofibers, has also been used to improve capacity of the battery by further improving the conductivity.

A single-walled carbon nanotube is one of the line-type conductive agents, and conductivity in an electrode active material layer is improved due to its thin and elongated shape. Thus, typically, after a dispersion including single-walled carbon nanotube units, in which the single-walled carbon nanotube units were present in a single strand form by completely dispersing the single-walled carbon nanotubes, was prepared, an electrode slurry was prepared by using the dispersion, and the electrode active material layer was prepared by using the electrode slurry. Accordingly, the single-walled carbon nanotubes exist as a unit (single strand) in the electrode active material layer. However, when charge and discharge of the battery are repeated, a surface of the single-walled carbon nanotube unit is damaged or the single-walled carbon nanotube unit is broken, and thus, it may be difficult to maintain a conductive network in the electrode active material layer. Accordingly, the conductive network is blocked or reduced, and this degrades life characteristics of the battery.

Thus, there is also a method of using multi-walled carbon nanotubes to ensure conductivity even when the surface of the carbon nanotube is damaged. However, with respect to the multi-walled carbon nanotube, since it is cut to an excessively short length during preparation of a dispersion due to its structure formed by being grown in units of nodes, there is a limit to improving the conductivity of the electrode.

Even with respect to a plane-type conductive agent such as graphene, electrical conductivity is excellent, but it may be difficult to prepare thin single layer graphene, and, in a case in which thick graphene is used, battery efficiency may be reduced. Also, with respect to the plane-type conductive agent, electrolyte solution mobility may be limited in the battery due to a wide planar contact. Furthermore, since the graphene is mostly present in a form covering the surface of the electrode active material, it is not suitable for forming a long conductive network between the electrode active materials.

Therefore, there is a need for a method capable of reducing resistance of the electrode and improving life characteristics of the battery by introducing a new type of conductive agent.

### DISCLOSURE OF THE INVENTION

### TECHNICAL PROBLEM

An aspect of the present invention provides an electrode having low resistance and capable of improving life characteristics of a battery.

Another aspect of the present invention provides a secondary battery including the electrode.

### TECHNICAL SOLUTION

According to an aspect of the present invention, there is provided an electrode including an electrode active material layer, wherein the electrode active material layer includes an electrode active material and a conductive agent, wherein the conductive agent includes graphene; and a carbon nanotube structure in which 2 to 5,000 single-walled carbon nanotube units are bonded to each other, and the carbon nanotube structure is included in an amount of 0.01 wt% to 0.5 wt% in the electrode active material layer.

According to another aspect of the present invention, there is provided a secondary battery including the electrode.

### ADVANTAGEOUS EFFECTS

Since an electrode according to the present invention includes a carbon nanotube structure in which 2 to 5,000 single-walled carbon nanotube units are bonded to each other, a conductive network may be maintained smoothly even during charge/discharge processes of a battery. Accordingly, resistance of the electrode may be maintained at a low level, and life characteristics of the battery may be improved. Also, since the carbon nanotube structure is present in the form of a long rope in the electrode, a decrease in conductivity due to damage of the carbon nanotube structure may be suppressed even if the battery is continuously charged and discharged, and a long conductive network may be formed. Furthermore, since the electrode includes graphene, the resistance of the battery may be further reduced due to excellent electrical conductivity of the graphene. Also, since the graphene contributes to the formation of a short conductive network by covering a surface of an electrode active material, the conductive network may be evenly formed over the entire electrode due to the combined use of the graphene and the carbon nanotube structure. Furthermore, since the graphene is present while covering at least a portion of the carbon nanotube structure, the conductive network may be maintained even during repeated charge and discharge of the battery.

### BRIEF DESCRIPTION OF THE DRAWINGS

FIG. 1 is scanning electron microscope (SEM) images of a multi-walled carbon nanotube unit (A) used in a comparative example and carbon nanotube structures (B, C) used in examples of the present invention;
FIG. 2 is transmission electron microscope (TEM) images of the carbon nanotube structure (A) used in the examples and a single-walled carbon nanotube unit (B) used in a comparative example of the present invention;
FIG. 3 is an SEM image and a TEM image of graphene used in the examples of the present invention;
FIG. 4 is SEM images of a positive electrode of Example 1 of the present invention;
FIG. 5 is an SEM image of the positive electrode of Example 1 of the present invention;
FIG. 6 is an SEM image of a positive electrode of Comparative Example 4 of the present invention; and
FIG. 7 is an SEM image of a positive electrode of Comparative Example 5 of the present invention.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used in the present specification are used to merely describe exemplary embodiments, but are not intended to limit the invention. The terms of a singular form may include plural forms unless referred to the contrary.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "%" denotes wt%unless explicitly stated otherwise.

In the present specification, the expression "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mini II by Bell Japan Inc.

The expression "average particle diameter (D₅₀)" in the present specification may be defined as a particle diameter at a cumulative volume of 50% in a particle size distribution curve. The average particle diameter (D₅₀), for example, may be measured by using a laser diffraction method. The laser diffraction method may generally measure a particle diameter ranging from a submicron level to a few mm and may obtain highly repeatable and high-resolution results.

In the present invention, the expression "single-walled carbon nanotube unit" denotes a unit in the form of a single-walled tube composed of carbon atoms, and the expression "multi-walled carbon nanotube unit" denotes a unit in the form of a tube with multiple walls composed of carbon atoms.

The expression "graphene" in the present specification denotes a carbonaceous structure which has a form, in which a single graphite plane or a plurality of graphite planes are stacked, flexibility, and a thin film form.

Hereinafter, the present invention will be described in detail.

### Electrode

An electrode according to the present invention includes an electrode active material layer, wherein the electrode active material layer includes an electrode active material and a conductive agent, wherein the conductive agent includes graphene; and a carbon nanotube structure in which 2 to 5,000 single-walled carbon nanotube units are bonded to each other, and the carbon nanotube structure may be included in an amount of 0.01 wt% to 0.5 wt% in the electrode active material layer.

The electrode may include an electrode active material layer. The electrode may further include a current collector, and, in this case, the electrode active material layer may be disposed on one surface or both surfaces of the current collector.

The current collector is not particularly limited as long as it has conductivity without causing adverse chemical changes in the battery, and, for example, copper, stainless steel, aluminum, nickel, titanium, alloys thereof, these materials that are surface-treated with one of carbon, nickel, titanium, silver, or the like, or fired carbon may be used.

The current collector may typically have a thickness of 3 µm to 500 µm, and microscopic irregularities may be formed on the surface of the collector to improve the adhesion of a electrode active material. Also, the electrode collector, for example, may be used in various shapes such as that of a film, a sheet, a foil, a net, a porous body, a foam body, a non-woven fabric body, and the like.

The electrode active material layer may include an electrode active material and a conductive agent.

The electrode active material may be a positive electrode active material or negative electrode active material commonly used in the art, but types thereof are not particularly limited.

For example, as the positive electrode active material, a lithium oxide including lithium and at least one metal such as cobalt, manganese, nickel, or aluminum may be used. Specifically, the lithium oxide may include lithium-manganese-based oxide (e.g., LiMnO₂, LiMn₂O, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y1}Mn_{Y1}O₂ (where 0<Y1<1), LiMn_{2-Z1}Ni_{z1}O₄ (where 0<Z1<2), etc.), lithium-nickel-cobalt-based oxide (e.g., LiNi_{1-Y2}Co_{Y2}O₂ (where 0<Y2<1, etc.)), lithium-manganese-cobalt-based oxide (e.g., LiCo_{1-Y3}Mn_{Y3}O₂ (where 0<Y3<1), LiMn_{2-z2}Co_{z2}O₄ (where 0<Z2<2), etc.), lithium-nickel-cobalt-manganese-based oxide (e.g., Li(Ni_{P1}Co_{Q1}Mn_{R1})O₂ (where 0<P1<1, 0<Q1<1, 0<R1<1, and P1+Q1+R1=1) or Li(Ni_{P2}Co_{Q2}Mn_{R2})O₄ (where 0<P2<2, 0<Q2<2, 0<R2<2, and P2+Q2+R2=2), etc.), or lithium-nickel-cobalt-manganese-transition metal (M) oxide (e.g., Li(Ni_{P3}Co_{Q3}Mn_{R3}M¹_{S})O₂ (where M¹ is selected from the group consisting of aluminum (Al), copper (Cu), iron (Fe), vanadium (V), chromium (Cr), titanium (Ti), zirconium (Zr), zinc (Zn), tantalum (Ta), niobium (Nb), magnesium (Mg), boron (B), tungsten (W), and molybdenum (Mo), and P3, Q3, R3, and S are atomic fractions of each independent elements, wherein 0<P3<1, 0<Q3<1, 0<R3<1, 0<S<1, and P3+Q3+R3+S=1), etc.), and any one thereof or a compound of two or more thereof may be included.

The negative electrode active material, for example, may include a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOᵥ(0<v<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbonaceous material.

The electrode active material may be included in an amount of 70 wt% to 99.5 wt%, for example, 80 wt% to 99 wt% based on a total weight of the electrode active material layer. When the amount of the electrode active material satisfies the above range, excellent energy density, electrode adhesion, and electrical conductivity may be achieved.

The conductive agent may include graphene and a carbon nanotube structure.

### (1) Graphene

The graphene is mainly disposed on a surface of the electrode active material to contribute to the formation of a conductive network between adjacent electrode active materials.

The graphene may include a structure in which 1 to 1,000 graphite planes are stacked, and, specifically, the number of the stacked graphite planes may be in a range of 1 to 500, for example, 1 to 100. In a case in which the number of the stacked graphite planes satisfies the above range, high-quality graphene properties with flexibility may be utilized due to its small thickness, and it is easy for the graphene to be uniformly dispersed in the electrode active material layer. Also, electrical conductivity of the electrode active material layer may be significantly improved even if a small amount of the graphene is used.

The graphene may have an average length of 0.1 µm to 100 µm, particularly 0.1 µm to 10 µm, and more particularly 0.1 µm to 5 µm. When the average length satisfies the above range, the graphene may be present while covering the electrode active material at an appropriate level. Also, since the graphene covers at least a portion of the carbon nanotube structure, a separation of the carbon nanotube structure from the electrode active material may be further suppressed. For this reason, a connection between the electrode active material and the electrode active material becomes closer, and conductivity may be further improved. The average length corresponds to an average value of lengths of top 100 graphenes with a larger length and lengths of bottom 100 graphenes with a shorter length in the electrode observed by a scanning electron microscope (SEM) or a transmission electron microscope (TEM). Herein, the expression "length of the graphene" denotes the longest length when assuming a line from one point to another point in one graphene sheet.

The graphene may have an average thickness of 0.3 nm to 300 nm, particularly 1 nm to 100 nm, and more particularly 1 nm to 50 nm. When the average thickness satisfies the above range, the graphene may better cover the electrode active material by utilizing the high-quality graphene properties with flexibility due to its small thickness, and it is easy for the graphene to be uniformly dispersed in the electrode active material layer. Also, the electrical conductivity of the electrode active material layer may be significantly improved even if a small amount of the graphene is used. The average thickness corresponds to an average value of thicknesses of top 100 graphenes with a larger thickness and thicknesses of bottom 100 graphenes with a smaller thickness in the electrode observed by an SEM or a TEM.

The graphene may have a Brunauer-Emmett-Teller (BET) specific surface area of 100 m²/g to 500 m²/g, particularly 100 m²/g to 400 m²/g, and more particularly 100 m²/g to 300 m²/g. In a case in which the specific surface area satisfies the above range, dispersibility of the graphene in an electrode slurry is good, and the electrical conductivity of the electrode active material layer may be significantly improved even with a small amount of the graphene. The BET specific surface area may be measured by a nitrogen adsorption BET method.

The graphene may be included in an amount of 0.01 wt% to 1.0 wt%, particularly 0.05 wt% to 0.5 wt%, and more particularly 0.1 wt% to 0.5 wt% in the electrode active material layer. In a case in which the amount of the graphene satisfies the above range, adhesion and electrical conductivity of the electrode may be significantly improved by only using a small amount of the graphene, and input/output characteristics and life characteristics of the battery may be improved.

### (2) Carbon Nanotube Structure

The carbon nanotube structure may include a plurality of single-walled carbon nanotube units. Specifically, the carbon nanotube structure may be a carbon nanotube structure in which 2 to 5,000 single-walled carbon nanotube units are bonded to each other. More specifically, in consideration of durability of the electrode and the conductive network, the carbon nanotube structure is most preferably a carbon nanotube structure in which 2 to 4,500, preferably 50 to 4,000, and more preferably 1,000 to 4,000 single-walled carbon nanotube units are bonded to each other.

The single-walled carbon nanotube units may be arranged side by side and bonded in the carbon nanotube structure (cylindrical structure having flexibility in which the units are bonded such that long axes of the units are parallel to each other) to form the carbon nanotube structure. The carbon nanotube structures are interconnected in the electrode to form a network structure.

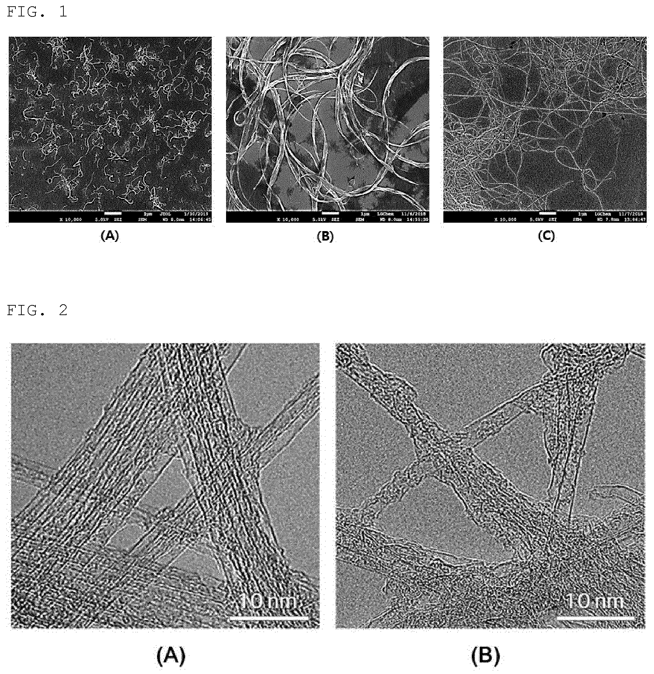

Typical electrodes including carbon nanotubes are generally prepared by preparing a conductive agent dispersion by dispersing bundle type or entangled type carbon nanotubes (form in which single-walled carbon nanotube units or multi-walled carbon nanotube units are attached or entangled with each other) in a dispersion medium and then using the conductive agent dispersion. In this case, since the carbon nanotubes are fully dispersed in the typical conductive agent dispersion, the carbon nanotubes are present as the conductive agent dispersion in which single-stranded carbon nanotube units are dispersed. With respect to the typical conductive agent dispersion, since the carbon nanotube units are easily cut by an excessive dispersion process, the carbon nanotube units have a length shorter than an initial length. Also, the carbon nanotube units may also be easily cut during a rolling process of the electrode, and the carbon nanotube units (particularly, single-walled carbon nanotube unit) may additionally be cut or surface damaged due to excessive changes in volume of the electrode active material during operation of the battery. Accordingly, since conductivity of the electrode is reduced, the input/output characteristics and life characteristics of the battery may be degraded. Furthermore, with respect to the multi-walled carbon nanotube units, structural defects are high due to a mechanism in which nodes grow (the units are not smooth and linear, but the nodes are present due to defects generated during the growth process). Thus, the multi-walled carbon nanotube units are more easily cut in the dispersion process (see A of FIG. 1), and the short-cut multi-walled carbon nanotube units may be easily aggregated by π-π stacking caused by a carbon's surface bonding structure (sp2) of the unit. Accordingly, it is more difficult for the multi-walled carbon nanotube units to be more uniformly dispersed in the electrode slurry.

Alternatively, with respect to the carbon nanotube structure included in the electrode of the present invention, since the carbon nanotube structure is in the form of a rope in which 2 to 5,000 single-walled carbon nanotube units maintaining relatively high crystallinity without structural defects are arranged side by side and bonded together (see B and C of FIG. 1 and A of FIG. 2), the single-walled carbon nanotube units may not be cut even with changes in the volume of the electrode active material and their length may be smoothly maintained, and thus, the conductivity of the electrode may be maintained even during continuous charge/discharge processes of the battery. Also, since the conductivity of the electrode is increased due to high conductivity of the single-walled carbon nanotube unit having high crystallinity, the input/output characteristics and life characteristics of the battery may be significantly improved. Furthermore, since the carbon nanotube structures are interconnected in the electrode to have a network structure, an excessive change in the volume of the electrode active material may be suppressed to prevent crack generation and a strong conductive network may be secured at the same time. Also, even if cracks are generated in the electrode active material, since the carbon nanotube structure may connect the electrode active materials while crossing the cracks, the conductive network may be maintained. Furthermore, since the carbon nanotube structure is not easily broken and may maintain its long shape, the conductive network may be strengthened over the entire electrode active material layer. Also, electrode adhesion may be significantly improved by inhibiting exfoliation of the electrode active material.

Particularly, from the point of view of the combined use with the graphene, the graphene is mainly disposed on the surface of the electrode active material to contribute to securing conductivity at small length scales, but the carbon nanotube structure may contribute to securing conductivity at large length scales through the network structure and its large length. Furthermore, since the graphene is present while covering at least a portion of the carbon nanotube structure, the conductive network may be closely maintained even with repeated charge and discharge of the battery. Thus, when the graphene is used in combination with the carbon nanotube structure, since a close and uniform conductive network may be formed over the entire electrode active material layer while reducing a total amount of the conductive agent, the input/output characteristics and life characteristics of the battery may be significantly improved.

In the carbon nanotube structure, the single-walled carbon nanotube unit may have an average diameter of 0.5 nm to 5 nm, for example, 1 nm to 5 nm. When the average diameter is satisfied, the conductivity in the electrode may be maximized even with a very small amount of the conductive agent. The average diameter corresponds to an average value of top 100 single-walled carbon nanotube units with a larger diameter and bottom 100 single-walled carbon nanotube units when the prepared electrode is observed by a TEM.

In the carbon nanotube structure, the single-walled carbon nanotube unit may have an average length of 1 µm to 100 µm, for example, 5 µm to 50 µm. When the average length is satisfied, since a long conductive path for conductive connection between the electrode active materials may be formed and a unique network structure may be formed, the conductivity in the electrode may be maximized even with a very small amount of the conductive agent. The average length corresponds to an average value of top 100 single-walled carbon nanotube units with a larger length and bottom 100 single-walled carbon nanotube units when the prepared electrode is observed by a TEM.

The single-walled carbon nanotube unit may have a specific surface area of 500 m²/g to 1,000 m²/g, for example, 600 m²/g to 800 m²/g. When the specific surface area satisfies the above range, since the conductive path in the electrode may be smoothly secured by the wide specific surface area, the conductivity in the electrode may be maximized even with a very small amount of the conductive agent. The specific surface area of the single-walled carbon nanotube unit may specifically be calculated from a nitrogen gas adsorption amount at a liquid nitrogen temperature (77K) using BELSORP-mini II by Bell Japan Inc.

The carbon nanotube structure may have an average diameter of 2 nm to 200 nm, particularly 5 nm to 150 nm, and more particularly 50 nm to 120 nm. When the average diameter satisfies the above range, since it is effective in forming a conductive network structure and is advantageous in connecting the active materials, excellent electrical conductivity may be achieved. The average diameter corresponds to an average value of diameters of top 100 carbon nanotube structures with a larger diameter and bottom 100 carbon nanotube structures when the prepared electrode is observed by an SEM.

The carbon nanotube structure may have an average length of 1 µm to 500 µm, particularly 5 µm to 100 µm, and more particularly 10 µm to 70 µm. When the average length satisfies the above range, since it is effective in forming the conductive network structure and is advantageous in connecting the electrode active materials, excellent electrical conductivity may be achieved. The average length corresponds to an average value of lengths of top 100 carbon nanotube structures with a larger length and lengths of bottom 100 carbon nanotube structures when the prepared electrode is observed by an SEM.

The carbon nanotube structure may be included in an amount of 0.01 wt% to 0.5 wt% in the electrode active material layer, may specifically be included in an amount of 0.01 wt% to 0.15 wt%, and may more specifically be included in an amount of 0.01 wt% to 0.1 wt%. When the amount of the carbon nanotube structure satisfies the above range, since the conductive path in the electrode may be secured, the life characteristics of the battery may be improved while electrode resistance is maintained at a low level. In a case in which the bundle type carbon nanotubes are fully dispersed (as a typical dispersion method in which the carbon nanotubes are dispersed so that single-stranded carbon nanotube units are separated from each other as much as possible) when the conductive agent dispersion is prepared, the carbon nanotube structure is not generated, or is generated in a very small amount (for example, 0.0005 wt%) even if it is unintentionally generated. That is, the above amount range may never be achieved in the usual way. Since the carbon nanotube structure is in the form in which 2 to 5,000 single-walled carbon nanotube units are arranged side by side and bonded together, the carbon nanotube structure may not be cut even with changes in the volume of the electrode active material and their length may be smoothly maintained. Thus, the conductivity of the electrode may be maintained and the conductivity of the electrode may be smoothly secured due to the high conductivity of the carbon nanotube structure. Accordingly, the input/output characteristics and life characteristics of the battery may be excellent even if the amount of the carbon nanotube structure in the electrode is low.

In some cases, the single-walled carbon nanotube unit may be surface-treated through an oxidation treatment or nitridation treatment to improve affinity with a dispersant.

A weight ratio of the graphene to the carbon nanotube structure may be in a range of 100:1 to 100:200, particularly 100:2 to 100:100, and more particularly 100:5 to 100:50. In a case in which the weight ratio satisfies the above range, the total amount of the conductive agent for an appropriate level of conductivity may be reduced while increasing a solid content of the electrode slurry. Also, since the adhesion and electrical conductivity of the electrode may be simultaneously improved, the input/output characteristics and life characteristics of the battery may be significantly improved.

The electrode active material layer may further include a binder. The binder is for securing adhesion between the electrode active materials and adhesion of the electrode active material to the current collector, wherein common binders used in the art may be used, and types thereof are not particularly limited. The binder, for example, may include polyvinylidene fluoride-hexafluoropropylene copolymer (PVDF-co-HFP), polyvinyl alcohol, polyacrylonitrile, starch, hydroxypropyl cellulose, regenerated cellulose, polyvinylpyrrolidone, tetrafluoroethylene, polyethylene, polypropylene, an ethylene-propylene-diene monomer (EPDM), a sulfonated-EPDM, carboxymethyl cellulose (CMC), a styrene-butadiene rubber (SBR), a fluorine rubber, or various copolymers thereof, and any one thereof or a mixture of two or more thereof may be used.

The binder may be included in an amount of 10 wt% or less, for example, 0.1 wt% to 5 wt% based on the total weight of the electrode active material layer. In a case in which the amount of the binder satisfies the above range, excellent electrode adhesion may be achieved while minimizing an increase in the electrode resistance.

The electrode active material layer may further include at least one of polyvinylidene fluoride and a hydrogenated nitrile butadiene rubber. The polyvinylidene fluoride and the hydrogenated nitrile butadiene rubber play a role in helping to disperse bundle or entangled type single-walled carbon nanotubes or bundle or entangled type multi-walled carbon nanotubes in a conductive agent dispersion used in the preparation of the electrode, and may be included in the electrode because the electrode slurry is prepared from the conductive agent dispersion.

### Method of Preparing Electrode

Next, a method of preparing the electrode of the present invention will be described.

The method of preparing the electrode of the present invention may include the steps of: preparing a graphene dispersion and a carbon nanotube structure dispersion (S1); and forming an electrode slurry including the graphene dispersion, the carbon nanotube structure dispersion, and an electrode active material (S2).

### (1) Preparing of the Graphene and Carbon Nanotube Structure Dispersions (S1)

### 1) Preparation of the Graphene Dispersion

After a mixed solution including the graphene of the above-described embodiment, a dispersion medium, and a dispersant is prepared, the graphene dispersion may be prepared by using a homogenizer, a bead mill, a ball mill, a basket mill, an attrition mill, a universal stirrer, a clear mixer, a spike mill, a TK mixer, or a method such as sonication. Since the dispersion medium and the dispersant may be the same as those used in the preparation of the carbon nanotube structure dispersion to be described later, the dispersion medium and the dispersant will be described below.

### 2) Preparation of the Carbon Nanotube Structure Dispersion

The preparation of the carbon nanotube structure dispersion may include the steps of: preparing a mixed solution including a dispersion medium, a dispersant, and bundle type single-walled carbon nanotubes (bonded body or aggregate of single-walled carbon nanotube units) (S1-1); and forming a carbon nanotube structure, in which 2 to 5,000 single-walled carbon nanotube units are bonded side by side, by dispersing the bundle type single-walled carbon nanotubes by applying a shear force to the mixed solution (S1-2).

In step S1-1, the mixed solution may be prepared by adding bundle type single-walled carbon nanotubes and a dispersant to a dispersion medium. The bundle type single-walled carbon nanotubes are present in the form of a bundle in which the above-described single-walled carbon nanotube units are bonded, wherein the bundle type carbon nanotube includes usually 2 or more, substantially 500 or more, for example, 5,000 or more single-walled carbon nanotube units.

The bundle type single-walled carbon nanotube may have a specific surface area of 500 m²/g to 1,000 m²/g, for example, 600 m²/g to 800 m²/g. When the specific surface area satisfies the above range, since the conductive path in the electrode may be smoothly secured by the wide specific surface area, the conductivity in the electrode may be maximized even with a very small amount of the conductive agent.

The bundle type single-walled carbon nanotubes may be included in an amount of 0.1 wt% to 1.0 wt%, for example, 0.2 wt% to 0.5 wt% in the mixed solution. When the amount of the bundle type single-walled carbon nanotubes satisfies the above range, since the bundle type single-walled carbon nanotubes are dispersed in an appropriate level, a carbon nanotube structure may be formed at an appropriate level and dispersion stability may be improved.

The dispersion medium, for example, may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ-butyrolactone, and ε-propiolactone, and any one thereof or a mixture of two or more thereof may be used, but the present invention is not limited thereto. Specifically, the dispersion medium may be N-methylpyrrolidone (NMP).

The dispersant may include at least one selected from a hydrogenated nitrile butadiene rubber, polyvinylidene fluoride, and carboxy methyl cellulose, and may specifically be polyvinylidene fluoride or a hydrogenated nitrile butadiene rubber.

In the conductive agent dispersion, a weight ratio of the bundle type carbon nanotubes to the dispersant may be in a range of 1:0.1 to 1:7, for example, 1:1 to 1:6. In a case in which the weight ratio satisfies the above range, since the bundle type single-walled carbon nanotubes are dispersed in an appropriate level, a carbon nanotube structure may be formed at an appropriate level and the dispersion stability may be improved.

A solid content in the mixed solution may be in a range of 0.1 wt% to 20 wt%, for example, 1 wt% to 10 wt%. In a case in which the solid content satisfies the above range, since the bundle type single-walled carbon nanotubes are dispersed in an appropriate level, a carbon nanotube structure may be formed at an appropriate level and the dispersion stability may be improved. Also, the electrode slurry may have viscosity and elasticity suitable for an electrode preparation process, and it also contributes to increase the solid content of the electrode slurry.

In step S1-2, a process of dispersing the bundle type carbon nanotubes in the mixed solution may be performed by using a mixing device such as a homogenizer, a bead mill, a ball mill, a basket mill, an attrition mill, a universal stirrer, a clear mixer, a spike mill, a TK mixer, or sonication equipment. Among them, a bead-mill method is preferred in that it may precisely control the diameter of the carbon nanotube structure, may achieve a uniform distribution of the carbon nanotube structure, and may have advantages in terms of cost.

The bead-mill method may be as follows. The mixed solution may be put in a vessel containing beads, and the vessel may be rotated to disperse the bundle type single-walled carbon nanotubes.

In this case, conditions under which the bead-mill method is performed are as follows.

The beads may have an average diameter of 0.5 mm to 1.5 mm, for example, 0.5 mm to 1.0 mm. In a case in which the average diameter satisfies the above range, the diameter of the carbon nanotube structure may be properly controlled without breaking the carbon nanotube structure during a dispersion process, and a dispersion solution with a uniform composition may be prepared.

A rotational speed of the vessel may be in a range of 500 RPM to 10,000 RPM, for example, 2,000 RPM to 6,000 RPM. In a case in which the rotational speed satisfies the above range, the diameter of the carbon nanotube structure may be properly controlled without breaking the carbon nanotube structure during the dispersion process, and a dispersion solution with a uniform composition may be prepared.

The time during which the bead mill is performed may be in a range of 0.5 hours to 2 hours, particularly 0.5 hours to 1.5 hours, and more particularly 0.8 hours to 1 hour. In a case in which the time satisfies the above range, the diameter of the carbon nanotube structure may be properly controlled without breaking the carbon nanotube structure during the dispersion process, and a dispersion solution with a uniform composition may be prepared. The performance time of the bead mill means total time during which the bead mill is used, and, thus, for example, if the bead mill is performed several times, the performance time means total time required for performing the bead mill several times.

The above bead mill conditions are for dispersing the bundle type single-walled carbon nanotubes at an appropriate level, and specifically exclude the case where the bundle type single-walled carbon nanotubes are completely dispersed into single-stranded single-walled carbon nanotubes. That is, the above bead mill conditions are for forming the carbon nanotube structure in which 2 to 5,000 single-walled carbon nanotube units are bonded together side by side in the conductive agent dispersion prepared by appropriately dispersing the bundle type single-walled carbon nanotubes. This may be achieved only when a composition of the mixed solution and dispersion process (e.g., bead mill process) conditions are strictly controlled.

A carbon nanotube structure dispersion may be formed through the above process.

### (2) Forming of the Electrode Slurry including the Graphene Dispersion, the Carbon Nanotube Structure Dispersion, and Electrode Active Material (S2)

When the graphene dispersion and the carbon nanotube structure dispersion are prepared through the above-described processes, an electrode slurry including the dispersions and an electrode active material is formed. In this case, the above-described electrode active materials may be used as the electrode active material.

Also, a binder and a solvent may be further included in the electrode slurry, if necessary. In this case, the binder of the above-described embodiment may be used as the binder. The solvent, for example, may include an amide-based polar organic solvent such as dimethylformamide (DMF), diethylformamide, dimethylacetamide (DMAc), and N-methylpyrrolidone (NMP); alcohols such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, or octanol; glycols such as ethylene glycol, diethylene glycol, triethylene glycol, propylene glycol, 1,3-propanediol, 1,3-butanediol, 1,5-pentanediol, or hexylene glycol polyhydric alcohols such as glycerin, trimethylolpropane, pentaerythritol, or sorbitol; glycol ethers such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, or tetraethylene glycol monobutyl ether; ketones such as acetone, methyl ethyl ketone, methyl propyl ketone, or cyclopentanone; and esters such as ethyl acetate, γ-butyrolactone, and ε-propiolactone, and any one thereof or a mixture of two or more thereof may be used, but the present invention is not limited thereto. The solvent may be the same or different from the dispersion medium used in the predispersion, and the solvent may preferably be N-methylpyrrolidone (NMP).

Next, the electrode slurry prepared as described above is dried to form an electrode active material layer. Specifically, the electrode active material layer may be prepared by a method of coating the electrode slurry on an electrode collector and drying the coated electrode collector, or may be prepared by a method of casting the electrode slurry on a separate support and then laminating a film separated from the support on the electrode collector. If necessary, the electrode active material layer is formed by the above-described method, and a rolling process may then be further performed. In this case, the drying and the rolling may be performed under appropriate conditions in consideration of physical properties of the electrode to be finally prepared, and are not particularly limited.

### Secondary Battery

A secondary battery according to another embodiment of the present invention may include a negative electrode, a positive electrode, a separator disposed between the positive electrode and the negative electrode, and an electrolyte, and at least one of the positive electrode and the negative electrode may be the electrode of the above-described embodiment. Specifically, the electrode of the above-described embodiment may be the positive electrode of the present embodiment.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

As the non-aqueous organic solvent, for example, an aprotic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate, may be used.

Particularly, among the carbonate-based organic solvents, since ethylene carbonate and propylene carbonate, as cyclic carbonate, well dissociate a lithium salt due to high permittivity as a highly viscous organic solvent, the cyclic carbonate may be preferably used. Since an electrolyte having high electrical conductivity may be prepared when the above cyclic carbonate is mixed with low viscosity, low permittivity linear carbonate, such as dimethyl carbonate and diethyl carbonate, in an appropriate ratio and used, the cyclic carbonate may be more preferably used.

A lithium salt may be used as the metal salt, and the lithium salt is a material that is readily soluble in the non-aqueous organic solvent, wherein, for example, at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components.

According to another embodiment of the present invention, a battery module including the secondary battery as a unit cell and a battery pack including the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, the present invention will be described in detail, according to specific examples and comparative examples.

### Preparation Example 1: Preparation of Graphene Dispersion

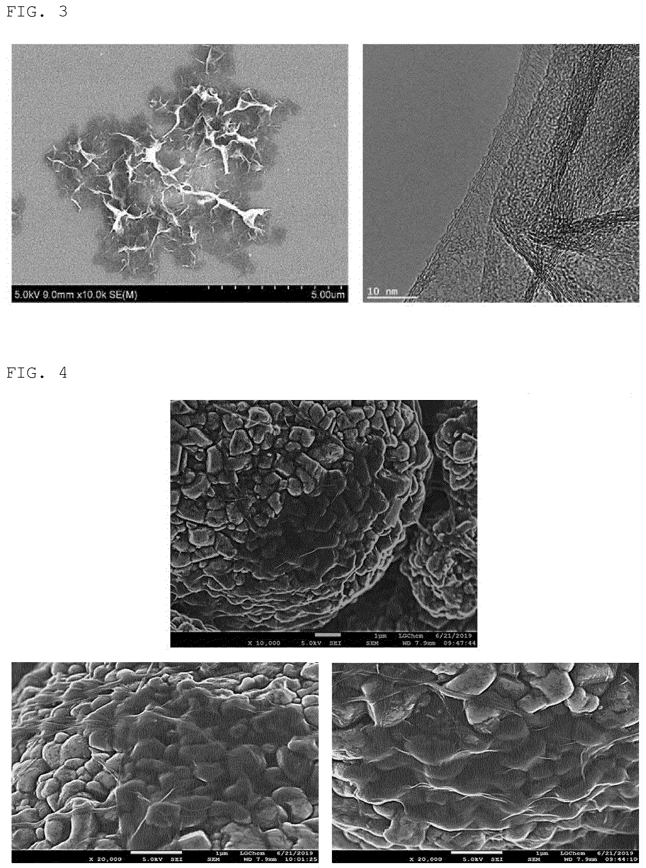

Chemically expanded graphene (powder form), a hydrogenated nitrile butadiene rubber (H-NBR) as a dispersant, and N-methylpyrrolidone (NMP), as a dispersion medium, were mixed at a weight ratio of 3.6:1.2:95.2 to form a mixture. The mixture was added to a spike mill, in which 80% was filled with beads having a diameter of 0.65 mm, dispersed, and discharged at a discharge rate of 2 kg/min. The chemically expanded graphene was completely dispersed by performing this process twice to prepare a graphene dispersion (see FIG. 3).

### Preparation Example 2: Preparation of Carbon Nanotube Structure Dispersion

Bundle type single-walled carbon nanotubes (specific surface area of 650 m²/g) composed of single-walled carbon nanotube units having an average diameter of 1.5 nm and an average length of 5 µm or more and polyvinylidene fluoride (PVdF, KF9700, weight-average molecular weight: 880,000 g/mol) were mixed in N-methylpyrrolidone (NMP), as a solvent, to prepare a mixture such that a solid content was 2.4 wt%.

The bundle type single-walled carbon nanotubes were dispersed in the solvent by stirring the mixture by a bead-mill method and thus, a carbon nanotube structure dispersion was prepared. In this case, beads had a diameter of 1 mm, a rotational speed of a stirring vessel containing the beads was 3,000 RPM, and the stirring was performed for 60 minutes. The carbon nanotube structure dispersion included a carbon nanotube structure in the form in which 2 to 5,000 single-walled carbon nanotube units were bonded side by side (see A of FIG. 2).

In the carbon nanotube structure dispersion, an amount of the carbon nanotube structure was 0.4 wt%, and an amount of the polyvinylidene fluoride was 2.0 wt%.

### Preparation Example 3: Preparation of Carbon Nanotube Structure Dispersion

A carbon nanotube structure dispersion was prepared in the same manner as in Preparation Example 2 except that the polyvinylidene fluoride in Preparation Example 2 was changed to a hydrogenated nitrile butadiene rubber (weight-average molecular weight: 260,000 g/mol).

### Preparation Example 4: Preparation of Carbon Black Dispersion

Carbon black (in the form of a secondary particle composed of primary particles having an average diameter of 25 nm) with a specific surface area of 240 m²/g and a hydrogenated nitrile butadiene rubber (weight-average molecular weight: 260,000 g/mol) were mixed in N-methylpyrrolidone (NMP), as a solvent, to prepare a mixture such that a solid content was 16.5 wt%.

The carbon black was dispersed in the solvent by stirring the mixture by a bead-mill method and thus, a carbon black dispersion was prepared. In this case, beads had a diameter of 1 mm, a rotational speed of a stirring vessel containing the beads was 3,000 RPM, and the stirring was performed for 60 minutes.

In the carbon black dispersion, an amount of the carbon black was 15 wt%, and an amount of the hydrogenated nitrile butadiene rubber was 1.5 wt%.

### Preparation Example 5: Preparation of Single-walled Carbon Nanotube Unit Dispersion

Bundle type single-walled carbon nanotubes (specific surface area of 650 m²/g) composed of single-walled carbon nanotube units having an average diameter of 1.5 nm and an average length of 5 µm or more and a hydrogenated nitrile butadiene rubber (weight-average molecular weight: 260,000 g/mol) were mixed in N-methylpyrrolidone (NMP), as a solvent, to prepare a mixture such that a solid content was 4.4 wt% (0.4 wt% of the bundle type single-walled carbon nanotubes, 4.0 wt% of the hydrogenated nitrile butadiene rubber).

The bundle type single-walled carbon nanotubes were dispersed in the solvent by stirring the mixture by a bead-mill method and thus, a conductive agent dispersion was prepared. In this case, beads had a diameter of 1 mm, a rotational speed of a stirring vessel containing the beads was 3,000 RPM, and stirring for 60 minutes under the above conditions was set as one cycle and total 4 cycles (natural cooling was performed for 60 minutes between each cycle) were performed. Accordingly, a single-walled carbon nanotube unit dispersion was prepared (see B of FIG. 2). In the dispersion, since the bundle-type single-walled carbon nanotubes were completely dispersed, the single-walled carbon nanotube unit only existed as a single-strand unit, but the above-described carbon nanotube structure was not detected. Also, in the single-walled carbon nanotube unit dispersion, an amount of the carbon nanotube structure was 0.4 wt%, and an amount of the hydrogenated nitrile butadiene rubber was 4.0 wt%.

### Preparation Example 6: Preparation of Multi-walled Carbon Nanotube Unit Dispersion

Bundle type multi-walled carbon nanotubes, a hydrogenated nitrile butadiene rubber (H-NBR) as a dispersant, and N-methylpyrrolidone (NMP), as a dispersion medium, were mixed at a weight ratio of 4:0.8:95.2 to form a mixture. The mixture was added to a spike mill, in which 80% was filled with beads having a diameter of 0.65 mm, dispersed, and discharged at a discharge rate of 2 kg/min. The bundle type multi-walled carbon nanotubes were completely dispersed by performing this process twice to prepare a multi-walled carbon nanotube unit dispersion.

### Examples and Comparative Examples

### Example 1: Preparation of Positive Electrode

The graphene dispersion of Preparation Example 1, the carbon nanotube structure dispersion of Preparation Example 2, LiNi_{0.6}Co_{0.2}Mn_{0.2}O₂(NCM622) as a positive electrode active material, and a binder (PVDF, KF9700) were mixed with N-methylpyrrolidone (NMP) to prepare a positive electrode slurry in which a solid content was 70.4%. The positive electrode slurry was coated on a 20 µm thick aluminum (Al) thin film current collector, dried at 130°C, and then rolled to prepare a positive electrode including a positive electrode active material layer.

97.8 wt% of the LiNi_{0.6}Co_{0.2}Mn_{0.2}O₂(NCM622), 1.7 wt% of the binder, 0.1 wt% of the hydrogenated nitrile butadiene rubber, 0.3 wt% of the graphene, and 0.1 wt% of the carbon nanotube structure were included in the positive electrode active material layer.

Referring to FIG. 4, in the positive electrode of Example 1, it may be confirmed that carbon nanotube structures in the form of a rope formed a network structure together while having a long length to connect NCM622 particles to each other. Also, it may be confirmed that graphene having a large surface formed a conductive network closely while covering the carbon nanotube structure.

### Example 2: Preparation of Positive Electrode

A positive electrode was prepared in the same manner as in Example 1 except that the carbon nanotube structure of Preparation Example 3 was used instead of the carbon nanotube structure of Preparation Example 2.

### Example 3: Preparation of Positive Electrode

A positive electrode was prepared in the same manner as in Example 1 except that 0.2 wt% of the graphene and 0.1 wt% of the carbon nanotube structure were included in the final positive electrode by varying amounts of the graphene dispersion of Preparation Example 1 and carbon nanotube structure dispersion of Preparation Example 2 used.

### Comparative Example 1: Preparation of Positive Electrode

A positive electrode was prepared in the same manner as in Example 1 except that 0.7 wt% of carbon black was used as a conductive agent of the positive electrode active material layer by using the carbon black dispersion of Preparation Example 4 instead of the graphene dispersion of Preparation Example 1 and the carbon nanotube structure dispersion of Preparation Example 2.

### Comparative Example 2: Preparation of Positive Electrode

A positive electrode was prepared in the same manner as in Example 1 except that 0.7 wt% of the graphene was included in the positive electrode active material layer by only using the graphene dispersion of Preparation Example 1 without using the carbon nanotube structure dispersion of Preparation Example 2.

### Comparative Example 3: Preparation of Positive Electrode

A positive electrode was prepared in the same manner as in Example 1 except that 0.7 wt% of the carbon nanotube structure was included in the positive electrode active material layer by only using the carbon nanotube structure dispersion of Preparation Example 2 without using the graphene dispersion of Preparation Example 1.

### Comparative Example 4: Preparation of Positive Electrode

A positive electrode was prepared in the same manner as in Example 1 except that the single-walled carbon nanotube unit dispersion of Preparation Example 5 was used instead of the carbon nanotube structure dispersion of Preparation Example 2.

### Comparative Example 5: Preparation of Positive Electrode

A positive electrode was prepared in the same manner as in Example 1 except that the multi-walled carbon nanotube unit dispersion of Preparation Example 6 was used instead of the carbon nanotube structure dispersion of Preparation Example 2.

**[Table 1]**

| | Graphene content (wt%) | Carbon nanotube structure content (wt%) | Single-walled carbon nanotube unit (completely dispersed form) content (wt%) | Carbon black content (wt%) | Multi-walled carbon nanotube unit content (wt%) |
|---|---|---|---|---|---|
| Example 1 | 0.3 | 0.1 | - | - | - |
| Example 2 | 0.3 | 0.1 | - | - | - |
| Example 3 | 0.2 | 0.1 | - | - | - |
| Comparative Example 1 | - | - | - | 0.7 | - |
| Comparative Example 2 | 0.7 | - | - | - | - |
| Comparative Example 3 | - | 0.7 | - | - | - |
| Comparative Example 4 | 0.3 | - | 0.1 | - | - |
| Comparative Example 5 | 0.3 | - | - | - | 0.1 |

In Example 1, Example 3, and Comparative Example 3, an average diameter of the carbon nanotube structure was 100 nm, and an average length thereof was 15.6 µm. In Example 2, an average diameter of the carbon nanotube structure was 10 nm, and an average length thereof was 8.2 µm. In Comparative Example 4, an average diameter of the single-walled carbon nanotube unit was 1.6 nm, and an average length thereof was 1.8 µm. In Comparative Example 5, an average diameter of the multi-walled carbon nanotube unit was 10.8 nm, and an average length thereof was 1.3 µm.

The average diameter and average length correspond to an average value of diameters (or lengths) of top 100 carbon nanotube structures (or multi-walled carbon nanotube units, or single-walled carbon nanotube units) with a larger diameter (or length) and bottom 100 single-walled carbon nanotube structures (or multi-walled carbon nanotube units, or single-walled carbon nanotube units) with a smaller diameter (or length) when the prepared positive electrode is observed by a TEM.

In Examples 1, 2, and 3, and Comparative Examples 2, 4, and 5, an average length of the graphene was 4.6 µm, and an average thickness thereof was 5.3 nm, and the average length and average thickness correspond to an average value of lengths (or thicknesses) of top 100 graphenes with a larger length (or thickness) and bottom 100 graphenes with a smaller diameter (or thickness) when the prepared positive electrode is observed by a TEM.

### Experimental Example 1: Observation of Positive Electrode

The positive electrodes of Example 1, Comparative Example 4, and Comparative Example 5 were observed by an SEM.

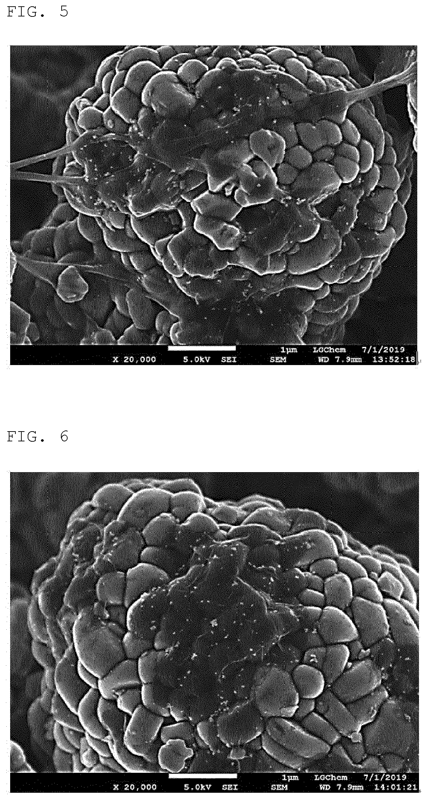

Referring to FIGS. 4 and 5, in the positive electrode of Example 1, it may be confirmed that the carbon nanotube structures in the form of a rope (form in which 2 to 5,000 single-walled carbon nanotube units are arranged side by side and bonded to each other) form a network structure together while having a long and thick shape to connect NCM622 particles to each other. Also, it may be confirmed that graphene having a large surface formed a conductive network closely while covering the carbon nanotube structure.

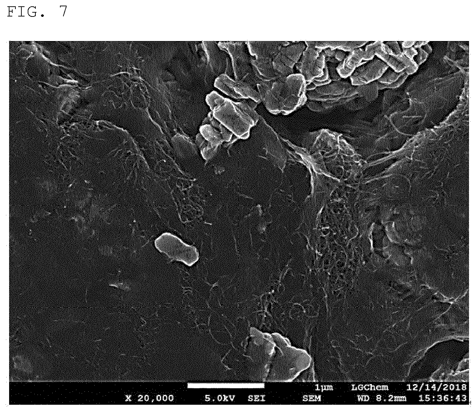

In contrast, referring to FIG. 6, single-stranded single-walled carbon nanotube units, which were completely dispersed in the positive electrode of Comparative Example 4, were mostly present on a surface of graphene, and it may be understood that their length or diameter was significantly smaller than that of the carbon nanotube structure of Example 1. Also, referring to FIG. 7, multi-walled carbon nanotube units were observed on a surface of graphene while having a very short length and being aggregated together in the positive electrode of Comparative Example 5, and it may be understood that their length or diameter was significantly smaller than that of the carbon nanotube structure of Example 1.

### Experimental Example 2: Evaluation of Powder Resistance of Positive Electrode Slurry

Powder resistance was evaluated for the positive electrode slurries formed in the preparation of the positive electrodes of Examples 1 to 3 and Comparative Examples 1 to 5 by the following method.

The positive electrode slurries were vacuum-dried at a temperature of 130°C for 3 hours and then ground to prepare powders. Thereafter, the powders were prepared as pellets under a load of 9.8 MPa at 25°C and a relative humidity of 50% using a Loresta GP instrument from Mitsubishi Chem. Analytec. Co., Ltd. Thereafter, powder resistance was measured by a 4-probe method, and the results thereof are presented in Table 2.

### Experimental Example 3: Battery Life Characteristics Evaluation

Batteries were respectively prepared as follows by using the positive electrodes of Examples 1 to 3 and Comparative Examples 1 to 5.

Artificial graphite as a negative electrode active material, carbon black as a negative electrode conductive agent, a styrene-butadiene rubber (SBR) as a negative electrode binder, and carboxymethyl cellulose (CMC) were mixed in distilled water at a weight ratio of 96.1:0.5:2.3:1.1 to prepare a negative electrode slurry. A 20 µm thick negative electrode collector (Cu) was coated with the prepared slurry so that a loading amount was 10 mg/cm² and dried. Thereafter, the negative electrode collector on which the negative electrode slurry was disposed was rolled by a roll rolling method such that a total thickness of the negative electrode slurry and the negative electrode collector was 80 µm. Thereafter, the negative electrode slurry and the negative electrode collector were dried at 110°C for 6 hours to prepare a negative electrode.

Thereafter, after a mono-cell was prepared by combining the above-prepared negative electrode and the above-described positive electrode with a 15 µm thick polyethylene-based separator disposed therebetween, an electrolyte solution (ethylene carbonate (EC)/ethylmethyl carbonate (EMC) = 1/2 (volume ratio)), lithium hexafluorophosphate (1 M LiPF₆)) was injected into the mono-cell to prepare a lithium secondary battery.

Charge and discharge of each of the lithium secondary batteries were performed under the following conditions.

Charge/discharge of each lithium secondary battery at 0.33 C/0.33 C in a voltage range of 4.25 V to 2.8 V at 45°C were set as one cycle, and total 100 cycles were performed. Thereafter, discharge capacity (capacity retention) after 100 cycles was evaluated based on discharge capacity after one cycle at 100% and presented in Table 2.

**[Table 2]**

| | Powder resistance of positive electrode slurry (Ω) | Capacity retention (%) |
|---|---|---|
| Example 1 | 14.8 | 96.9 |
| Example 2 | 17.2 | 95.7 |
| Example 3 | 18.5 | 94.8 |
| Comparative Example 1 | 253.3 | 79.4 |
| Comparative Example 2 | 53.6 | 90.5 |
| Comparative Example 3 | 15.1 | 93.6 |
| Comparative Example 4 | 202.7 | 81.3 |
| Comparative Example 5 | 108.4 | 84.2 |

## Claims

1. An electrode comprising an electrode active material layer,
wherein the electrode active material layer comprises an electrode active material and a conductive agent,
wherein the conductive agent comprises:
graphene; and
a carbon nanotube structure in which 2 to 5,000 single-walled carbon nanotube units are bonded to each other, and
the carbon nanotube structure is included in an amount of 0.01 wt% to 0.5 wt% in the electrode active material layer.

2. The electrode of claim 1, wherein a weight ratio of the graphene to the carbon nanotube structure is in a range of 100:1 to 100:200.

3. The electrode of claim 1, wherein the graphene is included in an amount of 0.01 wt% to 1.0 wt% in the electrode active material layer.

4. The electrode of claim 1, wherein the carbon nanotube structures are interconnected in the electrode to form a network structure.

5. The electrode of claim 1, wherein the single-walled carbon nanotube units are arranged side by side and bonded in the carbon nanotube structure.

6. The electrode of claim 1, wherein the carbon nanotube structure has an average length of 1 µm to 500 µm.

7. The electrode of claim 1, wherein the carbon nanotube structure has an average length of 10 µm to 70 µm.

8. The electrode of claim 1, wherein the carbon nanotube structure has an average diameter of 2 nm to 200 nm.

9. The electrode of claim 1, wherein the carbon nanotube structure has an average diameter of 50 nm to 120 nm.

10. The electrode of claim 1, wherein, in the carbon nanotube structure, the single-walled carbon nanotube unit has an average diameter of 0.5 nm to 5 nm.

11. The electrode of claim 1, wherein the graphene has an average length of 0.1 µm to 100 µm.

12. The electrode of claim 1, wherein the graphene has an average thickness of 0.3 nm to 300 nm.

13. The electrode of claim 1, wherein the carbon nanotube structure is a carbon nanotube structure in which 50 to 4,000 single-walled carbon nanotube units are bonded to each other.

14. The electrode of claim 1, wherein the electrode is a positive electrode.

15. A secondary battery comprising the electrode of any one of claims 1 to 14.
